# FASCICULE DE BREVET EUROPEEN

(11) **EP 1 983 300 B1**
(45) Date de publication et mention de la délivrance du brevet: **29.08.2018**
(21) Numéro de dépôt: 08290382.4
(22) Date de dépôt: 18.04.2008
(51) Int. Cl.: G01C 15/06

(54) **Système de relevé de hauteurs comprenant une règle téléscopique à deux extrémités coopérant avec un faisceau optique à balayage dans un plan horizontal**
System zur Höhenvermessung, das ein doppelendiges Teleskoplineal umfasst, das mit einem optischen Schwenkstrahl in einer horizontalen Ebene zusammenwirkt
Height surveying system comprising a telescopic ruler with two ends cooperating with a scanning optical beam in a horizontal plane

(30) Priorité: 20.04.2007 FR 0702887
(43) Date de publication de la demande: 22.10.2008
(73) Titulaire: Leica Geosystems AG, 9435 Heerbrugg (CH)
(72) Inventeur: Chiorean, Dumitru Mircea, 78600 Le Mesnil le Roi (FR); Keresztes, Zoltan, 1043 Budapest (HU); Gamal, Albert, 78600 Le Mesnil le Roi (FR)
(74) Mandataire: Lavialle, Bruno François Stéphane

(56) Documents cités:
- US-A- 4 240 208
- US-A- 4 820 041
- US-A- 6 011 628
- US-A1- 2006 201 008
- US-B1- 6 209 210

## Description

La présente invention concerne le domaine des appareils de détermination de niveau par détection lumineuse, par exemple sensibles à un faisceau laser. L'invention concerne plus particulièrement un système de relevé des hauteurs comprenant une règle télescopique à deux extrémités, coopérant avec un faisceau optique à balayage dans un plan horizontal.

Il est connu des systèmes de relevé de hauteur utilisant un niveau optique et une règle télescopique graduée tenue par un deuxième observateur.

Il est également connu des systèmes utilisant un balayage laser sur un mât photosensible pour déterminer une hauteur. Ce type de dispositif est enseigné par le brevet US 5 812 721, lequel nécessite un mât photosensible comportant une pluralité d'éléments photosensibles disposés autour du mât. Ce dispositif présente l'inconvénient d'avoir soit un mât très long équipé de grandes quantités d'éléments photosensibles et donc onéreux, soit d'avoir un mât de dimension restreinte avec une quantité faible de capteurs photosensibles pour diminuer le prix du mât, et dans ce cas là, on ne peut pas mesurer n'importe quelle hauteur ou dénivelé. Une règle télescopique est, par exemple, enseigné par le document US 6 076 267.

Il est également connu des systèmes utilisant un mat télescopique portant sur sa partie supérieur un ou plusieurs capteurs laser réagissant avec un balayage laser placé à distance. Ce type de dispositif est enseigné par les brevets US 4 240 208, US 6 011 628, US 6 209 210 ou US 2006/201 008

Il est également connu un système utilisant deux stations de référence à balayage laser et une station portable de réceptions. La mesure de la hauteur est déterminée en fonctions de la hauteur à laquelle l'un des faisceaux laser frappe le récepteur. Ce type de dispositif est enseigné par le brevet US 4 820 041.

La présente invention a donc pour objet de pallier un ou plusieurs des inconvénients de l'art antérieur en définissant un dispositif simple comportant peu de capteurs photosensibles permettant de mesurer rapidement et de façon efficace des hauteurs et des dénivelés.

Ce but est atteint par un système de relevé de hauteurs selon la revendication 1.

Un autre but de l'invention est de proposer un procédé de relevés de hauteurs à l'aide du système précédent, selon la revendication 10.

Les détails des modes de réalisation, selon l'invention, sont décrits dans les revendications dépendantes. D'autres particularités et avantages de la présente invention apparaîtront plus clairement à la lecture de la description ci-après faite en référence aux dessins annexés donnés à titre d'exemples non limitatifs dans lesquels :
- la figure 1 est une vue en élévation de la règle télescopique de mesure ;
- la figure 2 est une vue en coupe de la règle ainsi qu'une vue du système laser.

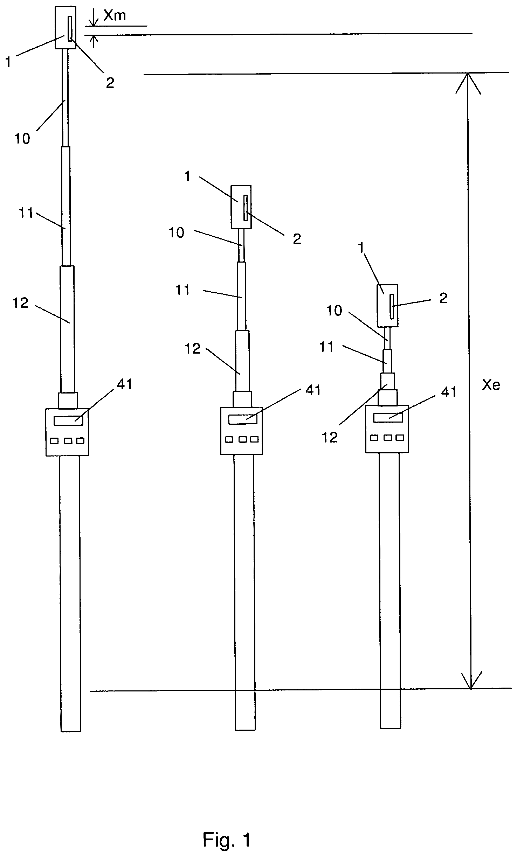

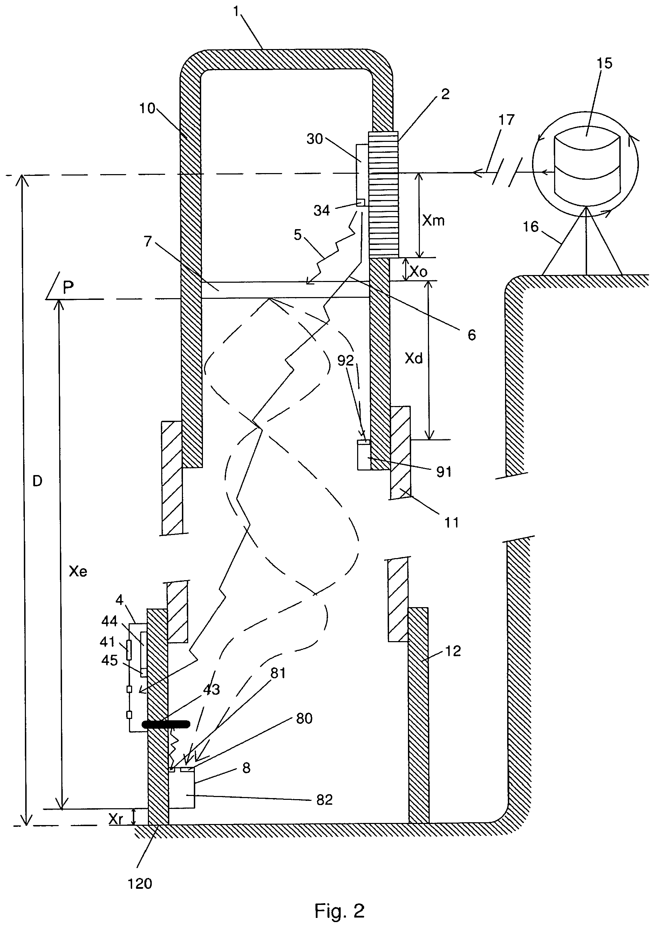

La présente invention sera maintenant décrite en référence aux figures 1 et 2, dans laquelle on peut voir sur la figure 1, une règle télescopique formée d'une tête ou embout (1) et d'un assemblage de tubes télescopiques (10, 11, 12) en forme de U inversé, les pattes du U étant insérées dans le sol. Dans un exemple de réalisation, la structure de la règle télescopique comporte trois tubes télescopiques (10, 11, 12), les deux extrémités (10, 12) et un élément intermédiaire (11), coulissant les uns sur les autres.

Dans l'exemple représenté, les deux extrémités (10, 12) et l'élément intermédiaire (11) sont des tubes en aluminium coulissants les uns sur les autres et comportant des graduations.

La première extrémité (10), dite extrémité supérieure, de la règle télescopique comporte une tête ou embout (1) de diamètre sensiblement égal à celui du diamètre de la deuxième extrémité (12), dite extrémité inférieure et supporte sur sa surface extérieure un récepteur sensible (2), de préférence linéaire, comme par exemple un capteur photoélectrique linéaire, qui permet de détecter un faisceau laser (17) provenant d'un système laser (15) à balayage monté par exemple, sur un ensemble trépied (16).

De façon avantageuse, on peut obtenir selon l'invention un système de relevé de hauteurs formant une mire et permettant une détermination de hauteur par rapport à une surface sur laquelle est posée la mire.

Ce système de relevé de hauteurs comporte la règle télescopique formée de la tête ou embout (1) et de l'assemblage d'au moins trois tubes télescopiques (10, 11, 12). Ce système de relevé de hauteurs permet de faire varier une distance ou hauteur ou dénivelé (D) entre une extrémité d'appui (120) formant une base de l'assemblage télescopique (10, 11, 12) et une extrémité supérieure (10) supportant la tête ou embout (1), dite distance d'extension de la règle télescopique.

Ce système de relevé de hauteurs rassemble avantageusement :
- un système de mesure (4, 7, 8) de ladite distance (D) ;
- un récepteur sensible (2), de préférence linéaire, placé dans la tête ou embout (1) de la règle télescopique et doté d'au moins une cellule photosensible pour détecter un faisceau lumineux tel qu'un faisceau laser (17) provenant du système laser (15) à balayage ;
- un module de déclenchement (30) ou validation d'une mesure de hauteur par le système de mesure (4, 7, 8), connecté au récepteur sensible (2) et déclenchant la mesure ou validation lorsqu'il reçoit un signal déterminé du récepteur sensible (2), le signal déterminé étant représentatif d'une détection d'un faisceau laser (17) par une des cellules photosensibles du récepteur laser linéaire (2).

On comprend que la distance représentant le niveau de hauteur à relever et la hauteur mesurée par le système de mesure (4, 7, 8) peuvent différer d'une constance de hauteur dont le système de mesure (4, 7, 8) tient compte.

Dans un exemple de réalisation, le module de déclenchement (30) et le récepteur sensible (2) sont disposés dans un même boîtier supporté par l'élément télescopique formant l'extrémité supérieure (10) de la règle télescopique, ce boîtier formant la tête ou embout (1) de la règle télescopique comme illustré à la figure 1.

Lorsque le faisceau laser (17) impacte ou croise un des éléments ou une cellule photoélectrique du récepteur sensible (2) linéaire, le récepteur sensible (2) linéaire génère un signal électrique envoyé au module de déclenchement ou de validation (30) de mesure. Une fois ce signal électrique reçu, le module de déclenchement ou de validation (30) déclenche la mesure par l'envoi, via un émetteur d'ondes (34) disposé dans le boîtier du module de déclenchement ou de validation (30) et du récepteur sensible (2), d'un signal de déclenchement à un émetteur d'ondes (7).

En outre, le module de déclenchement ou de validation (30) de mesure est apte à déterminer une hauteur ou distance (Xm) séparant la cellule impactée du récepteur sensible (2) et un point ou plan de référence correspondant soit respectivement à un point représentatif de ou un plan passant par l'extrémité du récepteur sensible (2) linéaire soit respectivement à un point représentatif du ou un plan passant par le centre du récepteur sensible (2) linéaire. Cette information de hauteur ou distance (Xm) déterminée par le module de déclenchement ou de validation (30) est envoyée, via l'émetteur d'ondes (34), à un récepteur (43) d'un boîtier de contrôle ou commande (4) du système de mesure (4, 7, 8).

Les éléments (7, 8) du système de mesure (4, 7, 8) de la distance d'extension (D) de la règle télescopique permettent de mesurer une distance ou hauteur (Xe) séparant un plan de référence (P) correspondant à la position de l'émetteur d'ondes (7), par exemple à ultrasons, du système de mesure (4, 7, 8) et un plan passant par un récepteur d'ondes (80), par exemple à ultrasons, d'un boîtier de traitement (8) accolé et solidaire de l'extrémité inférieure (12) de la règle télescopique. En effet, l'émetteur d'ondes (7) du système de mesure (4, 7, 8) de la distance d'extension est disposé dans le plan de référence (P) et solidaire de l'élément télescopique formant l'extrémité supérieure (10) de la règle télescopique. Dés le déclenchement de mesure par le module de déclenchement ou de validation (30) de la mesure, cet émetteur d'ondes (7) envoie des ondes au récepteur d'ondes (80) du boîtier de traitement (8), solidaire de l'élément télescopique formant l'extrémité inférieure (12). Les signaux reçus par le récepteur d'ondes (80) sont ensuite traités par un module de traitement (82) de façon à déterminer la distance ou hauteur (Xe) séparant l'émetteur d'ondes (7) et le récepteur d'ondes (80). Cette distance ou hauteur (Xe) est ensuite envoyée, via un émetteur (81) du boîtier de traitement (8), au récepteur (43) du boîtier de contrôle (4).

Le boîtier de traitement (8) est accolé à l'extrémité inférieure (12) à une hauteur (Xr) de l'extrémité d'appui (120) de la règle télescopique. Cette hauteur (Xr) est connue et entrée par l'utilisateur de la règle télescopique au moyen d'un clavier du boîtier de contrôle (4) de façon à ce qu'elle soit mémorisée dans une mémoire (45) du boîtier de contrôle (4).

L'émetteur d'ondes (7), par exemple à ultrasons, peut être placé dans le plan de référence (P) à une distance ou hauteur (Xo) du récepteur sensible (2) linéaire. Cette distance (Xo) est connue et entrée par l'utilisateur de la règle télescopique au moyen d'un clavier du boîtier de contrôle (4) de façon à ce qu'elle soit mémorisée dans la mémoire (45) du boîtier de contrôle (4).

De façon avantageuse, la mesure de la distance (Xe) est rapide puisque l'émetteur à ultrasons (7) coopère avec le récepteur d'ondes (80) du boîtier de traitement (8) dont le signal est généré par celui-ci et traité par un module de traitement (82) avant d'être renvoyé par l'émetteur (81) du boîtier de traitement (8), par exemple, un émetteur (81) à infrarouge, vers le récepteur (43), par exemple à infrarouge, du boîtier de contrôle (4).

Un boîtier d'étalonnage (91, 92) est disposé à une distance (Xd) de l'émetteur à ultrasons (7). Un récepteur d'ondes (92) placé dans le boîtier d'étalonnage (91, 92) reçoit des ondes émises par l'émetteur d'ondes (7) dés le déclenchement de la mesure par le module de déclenchement ou de validation (30) de la mesure de façon à ce qu'un module de calcul (91) du boîtier d'étalonnage (91, 92) puisse calculer la distance (Xd) séparant le récepteur d'ondes (92) du boîtier d'étalonnage (91, 92) et l'émetteur d'ondes (7). Selon l'invention, ce module d'étalonnage (91, 92) est accolé et solidaire de l'élément télescopique formant, par exemple, l'extrémité supérieure (10) de la règle télescopique.

De façon avantageuse, la prise de mesure de la distance (Xd) est rapide puisque le boîtier d'étalonnage (91, 92) permet par envoi, via un émetteur (non représenté), par exemple, à infrarouge, du boîtier d'étalonnage (91, 92), de cette information représentatif de la distance (Xd) au boîtier de contrôle (4) de corriger les erreurs dues aux variations dimensionnelles de la règle télescopique. Ces variations dimensionnelles découlent des variations de températures lors de l'utilisation de la règle télescopique.

Le boîtier de contrôle (4) est accolé à et solidaire de l'élément télescopique formant l'extrémité inférieure (12) de la règle télescopique. Le boîtier de contrôle (4) comporte :
- le récepteur (43) destiné à recevoir les signaux représentatifs des hauteurs (Xe, Xm) et éventuellement (Xd) envoyés respectivement par l'émetteur (81) du boîtier de traitement (8), l'émetteur (34) du boîtier du module de déclenchement (30) et du récepteur sensible (2), l'émetteur (non représenté) du boîtier d'étalonnage (91, 92) ; et
- un module de traitement (44) destiné à traiter les signaux reçus par le récepteur (43) du boîtier de contrôle (4) et représentatifs des hauteurs (Xe, Xm) et éventuellement (Xd) lesquels après traitement par un programme mathématique approprié du module de traitement (44) et récupération des informations représentatifs des distances (Xo et Xr) stockés dans la mémoire (45) du boîtier de contrôle (4) fournissent le résultat représentatif de la hauteur ou dénivelé (D). Le calcul réalisé par le module de traitement consiste à ajouter les distances (Xr), (Xe), (Xo) et (Xm).

Après calcul, cette hauteur ou ce dénivelé (D) sont affichés sur un écran (41), par exemple un écran à affichage numérique, du boîtier de contrôle (4), et/ou mémorisés dans la mémoire ou les moyens de mémorisation (45) du boîtier de contrôle (4).

Il est à noter qu'un générateur de son (non représenté) émettant une tonalité audible par l'utilisateur dès que le faisceau laser optique (17) impacte le récepteur sensible (2) est disposé soit dans le boîtier recevant le module de déclenchement ou validation (30) de mesure soit dans le boîtier de contrôle (4). De façon avantageuse, cette tonalité permet de prévenir l'utilisateur que le faisceau laser optique (17) a impacté le récepteur sensible (2) et par conséquent, que l'utilisateur peut replier sa règle télescopique pour aller prendre une autre mesure à un autre endroit.

De façon avantageuse, l'utilisateur n'a pas à laisser sa règle télescopique maintenue déployée pendant toute la durée du calcul de la hauteur ou dénivelé (D) mais seulement pendant le temps nécessaire pour que le faisceau laser (17) impacte le récepteur sensible (2).

En outre, le système de relevé de hauteurs selon l'invention comporte des éléments photovoltaïques (non représentés) pour permettre l'alimentation des différents éléments constituants le système de relevé de hauteurs.

Dans une variante de réalisation, on pourra remplacer les systèmes de transmission à infrarouge ou à ultrason par d'autres systèmes de transmission, tels que Wi-fi ou Bluetooth, et le boîtier de contrôle (4) pourra ne pas être rendu solidaire d'un élément télescopique de la règle télescopique, mais être simplement un téléphone mobile, comportant des moyens de communication Bluetooth et un logiciel adapté pour la réception des mesures effectuées par le boîtier de traitement (8), le boîtier d'étalonnage (91, 92) et le boîtier recevant le module de déclenchement ou validation (30) de mesure et le récepteur sensible (2) linéaire permettant de calculer le dénivelé ou la hauteur (D) mesuré par la règle télescopique et d'afficher ce dénivelé ou cette hauteur (D) sur les moyens d'affichage traditionnels du téléphone portable.

Dans une autre variante de réalisation, le système de mesure de la distance d'extension (D) de la règle télescopique peut être un ruban ou fil solidaire, par une extrémité, d'un des éléments télescopiques formant une des extrémités (10, 12) de la règle télescopique et, par l'autre extrémité, solidaire d'un tambour monté en rotation sur l'autre élément télescopique formant une des extrémités (10, 12) de la règle télescopique.

Dans une autre variante de réalisation du système, le récepteur (92) d'étalonnage pourra être disposé à une distance à déterminer par le module de calcul (91) du boîtier d'étalonnage (91,92), cette distance séparant le récepteur (92) d'étalonnage et le récepteur (80) du boîtier de traitement (8). Ce récepteur d'étalonnage (92) permet par envoi de cette information au boîtier de contrôle (4) de corriger les erreurs dues aux variations dimensionnelles de la règle télescopique découlant des variations de températures lors de l'utilisation de la règle télescopique.

L'avantage d'une telle règle télescopique est qu'elle permet d'effectuer des mesures topographiques à l'aide d'un seul utilisateur qui commence par placer le système laser (15) à balayage sur un ensemble trépied (16) en un point du terrain, puis se déplace aux emplacements de mesures souhaités, déploie sa règle télescopique jusqu'au moment où le récepteur sensible (2) linéaire est impacté par un faisceau laser (17) en un point, lequel impactage déclenche, d'une part, la mesure et, d'autre part, l'émission d'un signal sonore indiquant à l'utilisateur qu'il peut replier sa règle télescopique pour se déplacer en un autre point de mesure. Pendant ce temps, le système de mesure (4, 7, 8) électronique du système de relevé de hauteurs élabore le résultat des mesures qui est ensuite stocké dans le boîtier de contrôle (4) et/ou affiché sur l'écran (41) du boîtier de contrôle (4). Arrivé à un autre point de mesure, l'utilisateur déploie la règle télescopique jusqu'à ce que le faisceau laser (17) impacte un élément ou cellule du récepteur sensible (2) linéaire, provoquant à nouveau l'émission d'un signal sonore et le déclenchement de la mesure via le système de mesure (4, 7, 8) incorporés dans la règle télescopique, puis l'affichage et/ou la mémorisation du résultat mesuré.

On comprend ainsi l'avantage d'un tel système par l'accélération de la prise des mesures et d'autre part l'économie réalisée pour la mise en oeuvre, car il ne nécessite qu'un seul utilisateur. Le fait d'utiliser un récepteur sensible (2) linéaire permet en outre d'obtenir une grande précision. Alternativement pour un système à bas coût (moins précis et/ou moins rapide) qui reste avantageux par rapport aux mires classiques, on peut prévoir selon l'invention une cellule (non linéaire) avec éventuellement un système de lentille pour augmenter la zone de détection. On comprend qu'avec la lentille on perd certes peu de temps pour obtenir la hauteur mais on perd également en précision.

Il doit être évident pour les personnes versées dans l'art que la présente invention permet des modes de réalisation sous de nombreuses autres formes spécifiques sans l'éloigner du domaine d'application de l'invention comme revendiqué.

## Revendications

1. Système de relevé de hauteurs comprenant une règle télescopique formée d'une tête (1) et d'un assemblage de tubes télescopiques (10, 11, 12) permettant de faire varier une distance (D) entre une extrémité d'appui (120) formant une base de l'assemblage télescopique (10, 11, 12) et une extrémité supérieure supportant la tête (1), dite distance d'extension (D) de la règle télescopique, la règle télescopique étant destinée à coopérer avec un faisceau optique (17) à balayage issu d'un système laser à balayage (15), dans un plan horizontal, la règle télescopique comportant :
- un système de mesure (4, 7, 8) de ladite distance (D) ;
- un récepteur sensible (2), placé dans la tête (1) de la règle télescopique et doté de cellule(s) photosensible(s) pour détecter le faisceau optique (17) issu du système laser (15) ;
- un module (30) de déclenchement ou de validation d'une mesure de hauteur par le système de mesure (4, 7, 8), connecté au récepteur sensible (2) et déclenchant automatiquement la mesure ou la validation lorsqu'il reçoit un signal déterminé du récepteur sensible (2), le signal déterminé étant représentatif d'une détection du faisceau laser (17) par une des cellules photosensibles du récepteur sensible (2),
le système de mesure (4, 7, 8) étant constitué d'un émetteur d'ondes (7) solidaire de l'extrémité supérieure (10) de la règle télescopique et coopérant avec un récepteur d'ondes (80) d'un boîtier de traitement (8) du système de mesure (4, 7, 8) de façon à ce que le signal reçu par le récepteur d'ondes (80) soit traité par un module de traitement (82) du boîtier de traitement (8) du système de mesure (4, 7, 8) pour déterminer la distance (Xe) séparant l'émetteur d'ondes (7) et le récepteur d'ondes (80), ladite distance (Xe) étant ensuite envoyée à un boîtier de contrôle (4) du système de mesure (4, 7, 8), ledit récepteur d'ondes (80) étant accordé sur les ondes de l'émetteur d'ondes (7) et ledit boîtier de traitement (8) étant solidaire de l'extrémité inférieure (12) de la règle télescopique, le système de relevé de hauteurs comprenant également un boîtier d'étalonnage (91, 92) qui comporte un récepteur d'étalonnage (92) destiné à recevoir des signaux émis par l'émetteur d'ondes (7), lesdits signaux émis par l'émetteur d'ondes (7)étant ensuite traités par un module de calcul (91) du boîtier d'étalonnage (91, 92) pour déterminer la hauteur (Xd) séparant le récepteur d'étalonnage (92) et l'émetteur d'ondes (7), ladite hauteur (Xd) étant ensuite envoyée via un émetteur d'ondes vers le boîtier de contrôle (4) du système de mesure (4, 7, 8),
le module d'étalonnage (91, 92) étant solidaire d'un des éléments télescopiques (10, 11, 12) formant la règle télescopique, pour permettre de compenser les erreurs du système de relevé de hauteurs dues aux variations de température.

2. Système selon la revendication 1, **caractérisé en ce que** le module de déclenchement ou de validation (30) de mesure comprend un émetteur d'ondes (34) pour transmettre, au boîtier de contrôle (4) du système de mesure (4, 7, 8), un signal représentatif de la mesure de la hauteur (Xm) séparant la cellule photosensible impactée par le faisceau laser (17) et un point de référence correspondant soit à un point représentatif de l'extrémité inférieure du récepteur sensible (2) soit à un point représentatif du centre du récepteur sensible (2) .

3. Système selon une des revendications 1 à 2, **caractérisé en ce que** le module de déclenchement ou de validation (30) ou le boitier de contrôle (4) du système de mesure (4, 7, 8) comportent un générateur de son émettant une tonalité dés que le faisceau optique (17) impacte le récepteur sensible (2).

4. Système selon une des revendications 1 à 3, **caractérisé en ce que** le boîtier de contrôle (4) du système électronique de mesure (4, 7, 8) comprend :
- un récepteur d'ondes (43) destiné à recevoir les signaux représentatifs des hauteurs (Xe, Xm, Xd) respectivement du boîtier de traitement (8) du système de mesure (4, 7, 8), du module de déclenchement ou de validation (30) de la mesure et du boîtier d'étalonnage (91, 92),
- un module de traitement (44) destiné à traiter les signaux reçus (Xe, Xm, Xd) par le récepteur d'ondes (43) pour déterminer la distance d'extension ou dénivelé ou hauteur mesurée (D) par un programme approprié mathématique en ajoutant éventuellement une distance (Xo) stockée dans une mémoire (45) du boîtier de contrôle (4) et séparant le point de référence et l'émetteur d'ondes (7) et une distance (Xr) stockée dans une mémoire (45) du boîtier de contrôle (4) et séparant l'extrémité d'appui (120) de la règle télescopique et du récepteur d'ondes (80) du boîtier de traitement (8),
- un clavier permettant à l'utilisateur de saisir les hauteurs connues (Xo et Xr) pour qu'elle soit stockée dans la mémoire (45) du boîtier de contrôle (4).

5. Système selon une des revendications 1 à 4, **caractérisé en ce que** la distance d'extension ou dénivelé ou hauteur mesurée (D) est ensuite affichée sur un écran d'affichage (41) prévu sur une interface utilisateur du boîtier de contrôle (4) et/ou mémorisée dans la mémoire (45) du boîtier de contrôle (4).

6. Système selon une des revendications 1 à 5, **caractérisé en ce que** la transmission des signaux entre les différents organes du système de relevé de hauteurs est du type à infrarouge ou radioélectrique ou à ultrason.

7. Système selon une des revendications 1 à 5, **caractérisé en ce que** le boîtier de contrôle (4) est un téléphone portable pourvu d'un logiciel de traitement des signaux de mesure émis par le système de mesure (4, 7, 8) de la règle télescopique, du module de déclenchement ou de validation (30) de mesure et du boîtier d'étalonnage (91, 92) et la transmission est du type Wi-fi ou Bluetooth.

8. Système selon une des revendications 4 ou 5, **caractérisé en ce que** la mémoire (45) du boîtier de contrôle (4) est apte à mémoriser une pluralité de mesures.

9. Système selon une des revendications 1 à 8, **caractérisé en ce que** le système de relevé de hauteurs comprend des éléments photovoltaïques pour l'alimentation de l'ensemble des éléments formant le système.

10. Procédé de relevés de hauteurs utilisant le système selon l'une des revendications 1 à 9, dans lequel un utilisateur, disposant d'un système laser (15) à balayage monté sur un ensemble trépied (16) en des points géométriques, se déplace avec une règle télescopique du système de relevé de hauteurs, en un premier point de relevé, déploie les éléments télescopiques de la règle télescopique, jusqu'à ce qu'au moins une cellule photosensible du récepteur sensible (2) soit impactée par le faisceau optique (17) du système laser (15) en provoquant ainsi l'émission d'un signal sonore et la mesure de la hauteur ou dénivelé (D) via le système de mesure (4, 7, 8) ; l'émission du signal sonore autorisant l'utilisateur à replier sa règle télescopique pour se déplacer vers un autre point de mesure en même temps que le système de mesure (4, 7, 8) élabore le résultat de la hauteur ou dénivelé (D) qui est affiché sur un écran (41) et/ou stocké dans la mémoire (45) du boîtier de contrôle (4), l'utilisateur arrivé à l'autre point de mesure déploie les différents éléments télescopiques de la règle télescopique jusqu'à faire impacter une cellule photosensible du récepteur sensible par le faisceau optique (17) et entendre un signal sonore indiquant la prise de mesure, qui déclenche la mesure de la hauteur ou dénivelé (D) de cet autre point de mesure via le système de mesure (4, 7, 8) ; le système de mesure (4, 7, 8) élaborant un autre résultat de hauteur ou dénivelé (D), la mesure de la hauteur ou dénivelé (D) étant réalisée par le système de mesure au moyen du boîtier d'étalonnage (91, 92) pour permettre de compenser les erreurs du système de relevé de hauteurs dues aux variations de température.

11. Procédé selon la revendication 10, **caractérisé en ce que** les opérations précédentes sont réitérées jusqu'à ce que tous les points du relevé topographique aient été parcourus et que l'enregistrement et/ou l'affichage de l'ensemble des mesures ait été effectué.

## Patentansprüche

1. System zur Höhenvermessung, umfassend ein Teleskoplineal, das aus einem Kopf (1) und einer Anordnung von Teleskoprohren (10, 11, 12) gebildet ist, die ein Variieren eines Abstandes (D) zwischen einem Auflageende (120), das eine Basis der Teleskopanordnung (10, 11, 12) bildet, und einem oberen Ende, das den Kopf (1) trägt, ermöglicht, bezeichnet als Verlängerungsabstand (D) des Teleskoplineals, wobei das Teleskoplineal dazu bestimmt ist, mit einem Abtastlichtstrahl (17), der aus einem Abtastlasersystem (15) stammt, in einer horizontalen Ebene zusammenzuarbeiten, wobei das Teleskoplineal umfasst:
- ein Messsystem (4, 7, 8) zum Messen des genannten Abstandes (D);
- einen empfindlichen Empfänger (2), der in dem Kopf (1) des Teleskoplineals platziert und mit einer oder mehreren lichtempfindlichen Zellen versehen ist, um den aus dem Lasersystem (15) stammenden Lichtstrahl (17) zu erfassen;
- ein Modul (30) zum Auslösen oder Validieren einer Höhenmessung durch das Messsystem (4, 7, 8), das mit dem empfindlichen Empfänger (2) verbunden ist und automatisch die Messung oder die Validierung auslöst, wenn es ein bestimmtes Signal des empfindlichen Empfängers (2) empfängt, wobei das bestimmte Signal repräsentativ für ein Erfassen des Laserstrahls (18) durch eine der lichtempfindlichen Zellen des empfindlichen Empfängers (2) ist,
wobei das Messsystem (4, 7, 8) aus einem Wellensender (7) gebildet ist, der mit dem oberen Ende (10) des Teleskoplineals verbunden ist und mit einem Wellenempfänger (80) eines Verarbeitungsgehäuses (8) des Messsystems (4, 7, 8) derart zusammenarbeitet, dass das von dem Wellenempfänger (80) empfangene Signal von einem Verarbeitungsmodul (82) des Verarbeitungsgehäuses (8) des Messsystems (4, 7, 8) verarbeitet wird, um den Abstand (Xe) zu bestimmen, der den Wellensender (7) und den Wellenempfänger (80) trennt, wobei der genannte Abstand (Xe) dann an ein Steuergerät (4) des Messsystems (4, 7, 8) gesendet wird, wobei der genannte Wellenempfänger (80) auf die Wellen des Wellensenders (7) abgestimmt und das Verarbeitungsgehäuse (8) mit dem unteren Ende (12) des Teleskoplineals verbunden ist, wobei das System zur Höhenvermessung ferner ein Eichgehäuse (91, 92) umfasst, das einen Eichempfänger (92) umfasst, der dazu bestimmt ist, Signale zu empfangen, die von dem Wellensender (7) ausgesandt werden, wobei die genannten Signale, die von dem Wellensender (7) ausgesandt werden, dann von einem Rechenmodul (91) des Eichgehäuses (91, 92) verarbeitet werden, um die Höhe (Xd) zu bestimmen, die den Eichempfänger (92) und den Wellensender (7) trennt, wobei die Höhe (Xd) dann über einen Wellensender in Richtung des Steuergeräts (4) des Messsystems (4, 7, 8) geschickt wird, wobei das Eichmodul (91, 92) mit einem der Teleskopelemente (10, 11, 12) verbunden ist, die das Teleskoplineal bilden, um ein Ausgleichen der Fehler des Systems zur Höhenvermessung aufgrund von Temperaturschwankungen zu gestatten.

2. System nach Anspruch 1, **dadurch gekennzeichnet, dass** das Modul (30) zum Auslösen oder Validieren der Messung einen Wellensender (34) umfasst, um zum Steuergerät (4) des Messsystems (4, 7, 8) ein Signal zu übertragen, das repräsentativ für die Messung der Höhe (Xm) ist, die die lichtempfindliche Zelle, die von dem Laserstrahl (17) getroffen wird, und einen Bezugspunkt trennt, der entweder einem Punkt entspricht, der repräsentativ für das untere Ende des empfindlichen Empfängers (2) ist, oder einem Punkt, der repräsentativ für die Mitte des empfindlichen Empfängers (2) ist.

3. System nach einem der Ansprüche 1 bis 2, **dadurch gekennzeichnet, dass** das Modul (30) zum Auslösen oder Validieren oder das Steuergerät (4) des Messsystems (4, 7, 8) einen Tonerzeuger umfassen, der einen Ton aussendet, sobald der Lichtstrahl (17) auf den empfindlichen Empfänger (2) trifft.

4. System nach einem der Ansprüche 1 bis 3, **dadurch gekennzeichnet, dass** das Steuergerät (4) des elektronischen Messsystems (4, 7, 8) umfasst:
- einen Wellenempfänger (43), der dazu bestimmt ist, die Signale zu empfangen, die repräsentativ für die Höhen (Xe, Xm, Xd) des Verarbeitungsgehäuses (8) des Messsystems (4, 7, 8), des Moduls (30) zum Auslösen oder Validieren der Messung bzw. des Eichgehäuses (91, 92) sind,
- ein Verarbeitungsmodul (44), das dazu bestimmt ist, die von dem Wellenempfänger (43) empfangenen Signale (Xe, Xm Xd) zu verarbeiten, um den Verlängerungsabstand oder den Höhenunterschied oder die gemessene Höhe (D) durch ein geeignetes mathematisches Programm zu bestimmen, indem gegebenenfalls ein Abstand (Xo) hinzugefügt wird, der in einem Speicher (45) des Steuergeräts (4) gespeichert ist und den Bezugspunkt und den Wellensender (7) trennt, sowie ein Abstand (Xr), der in einem Speicher (45) des Steuergeräts (4) gespeichert ist und das Auflageende (120) des Teleskoplineals und den Wellenempfänger (80) des Verarbeitungsgehäuses (8) trennt,
- eine Tastatur, die dem Nutzer ein Eingeben von bekannten Höhen (Xo und Xr) ermöglicht, damit sie in dem Speicher (45) des Steuergeräts (4) gespeichert ist.

5. System nach einem der Ansprüche 1 bis 4, **dadurch gekennzeichnet, dass** der Verlängerungsabstand oder der Höhenunterschied oder die gemessene Höhe (D) dann auf einem Anzeigebildschirm (41) angezeigt wird, der auf einer Benutzerschnittstelle des Steuergeräts (4) vorgesehen ist, und/oder in dem Speicher (45) des Steuergeräts (4) gespeichert wird.

6. System nach einem der Ansprüche 1 bis 5, **dadurch gekennzeichnet, dass** die Übertragung der Signale zwischen den verschiedenen Elementen des Systems zur Höhenvermessung der Art Infrarotübertragung oder Funkübertragung oder Ultraschallübertragung ist.

7. System nach einem der Ansprüche 1 bis 5, **dadurch gekennzeichnet, dass** das Steuergerät (4) ein tragbares Telefon ist, das mit einer Verarbeitungssoftware zur Verarbeitung von Messsignalen versehen ist, die von dem Messsystem (4, 7, 8) des Teleskoplineals, des Moduls (30) zum Auslösen und Validieren der Messung und des Eichgehäuses (91, 92) ausgesandt werden, und die Übertragung vom Typ Wi-Fi oder Bluetooth ist.

8. System nach einem der Ansprüche 4 oder 5, **dadurch gekennzeichnet, dass** der Speicher (45) des Steuergeräts (4) dazu geeignet ist, eine Vielzahl von Messungen zu speichern.

9. System nach einem der Ansprüche 1 bis 8, **dadurch gekennzeichnet, dass** das System zur Höhenvermessung photovoltaische Elemente zur Versorgung der Gesamtheit der das System bildenden Elemente umfasst.

10. Verfahren zur Höhenvermessung, das das System nach einem der Ansprüche 1 bis 9 einsetzt, bei dem sich ein Nutzer, der über ein Abtastlasersystem (15) verfügt, das auf einer Stativeinheit (16) an geometrischen Punkten angebracht wird, mit einem Teleskoplineal des Systems zur Höhenvermessung zu einem ersten Vermessungspunkt bewegt, die Teleskopelemente des Teleskoplineals ausfährt, bis mindestens eine lichtempfindliche Zelle des empfindlichen Empfängers (2) von dem Lichtstrahl (17) des Lasersystems (15) getroffen und so das Aussenden eines Tonsignals und die Messung der Höhe oder des Höhenunterschieds (D) über das Messsystem (4, 7, 8) bewirkt wird; wobei das Aussenden des Tonsignals dem Nutzer gestattet, sein Teleskoplineal einzufahren, um sich zu einem weiteren Messpunkt zu bewegen, zur gleichen Zeit wie das Messsystem (4, 7, 8) das Ergebnis der Höhe oder des Höhenunterschieds (D) ermittelt, das auf einem Bildschirm (41) angezeigt und/oder in dem Speicher (45) des Steuergeräts (4) gespeichert wird, der an dem weiteren Messpunkt angekommene Nutzer die verschiedenen Teleskopelemente des Teleskoplineals ausfährt, bis eine lichtempfindliche Zelle des empfindlichen Empfängers von dem Lichtstrahl (17) getroffen und ein Tonsignal wahrgenommen wird, das die Messung anzeigt, was die Messung der Höhe oder des Höhenunterschieds (D) dieses weiteren Messpunktes über das Messsystem (4, 7, 8) auslöst; wobei das Messsystem (4, 7, 8) ein weiteres Ergebnis der Höhe oder des Höhenunterschieds (D) ermittelt, wobei die Messung der Höhe oder des Höhenunterschieds (D) durch das Messsystem mittels des Eichgehäuses (91, 92) erfolgt, um die Fehler des Systems zur Höhenvermessung aufgrund von Temperaurschwankungen auszugleichen.

11. Verfahren nach Anspruch 10, **dadurch gekennzeichnet, dass** die vorhergehenden Operationen wiederholt werden, bis alle Punkte der topographischen Vermessung durchlaufen wurden und die Speicherung und/oder die Anzeige der Gesamtheit der Messungen durchgeführt wurde.

## Claims

1. Height recording system comprising a telescopic ruler formed of a head (1) and an assembly of telescopic tubes (10, 11, 12) for varying a distance (D) between a support end (120) forming a base of the telescopic assembly (10, 11, 12) and an upper end supporting the head (1), termed the extension distance (D) of the telescopic ruler, the telescopic ruler being intended to cooperate with a scanning optical beam (17) coming from a scanning laser system (15), in a horizontal plane, the telescopic rule including:
- a system (4, 7, 8) for measuring said distance (D) ;
- a sensitive receiver (2), placed in the head (1) of the telescopic ruler and provided with photosensitive cell(s) for detecting the optical beam (17) coming from the laser system (15);
- a module (30) for triggering or validating a measurement of height by the measuring system (4, 7, 8), connected to the sensitive receiver (2) and automatically triggering the measurement or validation when it receives a particular signal from the sensitive receiver (2), the particular signal representing detection of the laser beam (17) by one of the photosensitive cells of the sensitive receiver (2),
the measuring system (4, 7, 8) being constituted of a wave transmitter (7) integral with the upper end (10) of the telescopic ruler and cooperating with a wave receiver (80) of a processing unit (8) of the measuring system (4, 7, 8) so that the signal received by the wave receiver (80) is processed by a processing module (82) of the processing unit (8) of the measuring system (4, 7, 8) to determine the distance (Xe) between the wave transmitter (7) and the wave receiver (80), said distance (Xe) then being sent to a control unit (4) of the measuring system (4, 7, 8), said wave receiver (80) being tuned to the waves from the wave transmitter (7) and said processing unit (8) being integral with the lower end (12) of the telescopic ruler, the height recording system also comprising a calibration unit (91, 92) that includes a calibration receiver (92) for receiving signals transmitted by the wave transmitter (7), said signals transmitted by the wave transmitter (7) then being processed by a calculation module (91) of the calibration unit (91, 92) to determine the height (Xd) between the calibration receiver (92) and the wave transmitter (7), said height (Xd) then being sent via a wave transmitter to the control unit (4) of the measuring system (4, 7, 8),
the calibration module (91, 92) being integral with one of the telescopic elements (10, 11, 12) forming the telescopic ruler, in order to compensate for the errors of the height recording system caused by temperature variations.

2. System according to claim 1, **characterized in that** the measurement triggering or validation module (30) comprises a wave transmitter (34) for transmitting, to the control unit (4) of the measuring system (4, 7, 8), a signal representing the measurement of the height (Xm) between the photosensitive cell impacted by the laser beam (17) and a reference point corresponding either to a point representing the lower end of the sensitive receiver (2) or to a point representing the centre of the sensitive receiver (2).

3. System according to either one of Claims 1 or 2, **characterized in that** the triggering or validation module (30) or the control unit (4) of the measuring system (4, 7, 8) includes a sound generator for emitting a tone as soon as the optical beam (17) impacts the sensitive receiver (2) .

4. System according to any one of claims 1 to 3, **characterized in that** the control unit (4) of the electronic measuring system (4, 7, 8) comprises:
- a wave receiver (43) for receiving the signals representing the heights (Xe, Xm, Xd) respectively of the processing unit (8) of the measuring system (4, 7, 8), of the measurement triggering or validation module (30) and of the calibration unit (91, 92),
- a processing module (44) for processing the signals (Xe, Xm, Xd) received by the wave receiver (43) to determine the extension distance or height difference or measured height (D) by means of an appropriate mathematical program by optionally adding a distance (Xo) stored in a memory (45) of the control unit (4) between the reference point and the wave transmitter (7) and a distance (Xr) stored in a memory (45) of the control unit (4) between the support end (120) of the telescopic ruler and the wave receiver (80) of the processing unit (8),
- a keyboard allowing the user to enter the known heights (Xo and Xr) so that it is stored in the memory (45) of the control unit (4).

5. System according to any one of Claims 1 to 4, **characterized in that** the extension distance or height difference or measured height (D) is then displayed on a display screen (41) provided on a user interface of the control unit (4) and/or stored in the memory (45) of the control unit (4).

6. System according to any one of Claims 1 to 5, **characterized in that** the transmission of signals between the different elements of the height recording system is of the infrared or radio-frequency or ultrasound type.

7. System according to any one of Claims 1 to 5, **characterized in that** the control unit (4) is a mobile telephone provided with software for processing the measurement signals transmitted by the measuring system (4, 7, 8) of the telescopic ruler, the measurement triggering or validation module (30) and the calibration unit (91, 92) and the transmission is of the Wi-fi or Bluetooth type.

8. System according to either one of claims 4 or 5, **characterized in that** the memory (45) of the control unit (4) is able to store a plurality of measurements.

9. System according to any one of Claims 1 to 8, **characterized in that** the height recording system comprises photovoltaic elements for supplying all the elements forming the system.

10. Method of recording heights using the system according to any one of claims 1 to 9, in which a user, having a scanning laser system (15) mounted on a tripod assembly (16) at geometric points, moves with a telescopic ruler of the height recording system, at a first recording point, deploys the telescopic elements of the telescopic ruler, until at least one photosensitive cell of the sensitive receiver (2) is impacted by the optical beam (17) from the laser system (15) thereby causing the emission of a sound signal and the measurement of the height or height difference (D) via the measuring system (4, 7, 8), the emission of the sound signal allowing the user to collapse his telescopic ruler to move to another measuring point at the same time as the measuring system (4, 7, 8) produces the height or height difference result (D) which is displayed on a screen (41) and/or stored in the memory (45) of the control unit (4), the user on arriving at the other measuring point deploys the various telescopic elements of the telescopic ruler until the optical beam (17) impacts a photosensitive cell of the sensitive receiver and they hear a sound signal indicating the taking of the measurement, which triggers the measurement of the height or height difference (D) of this other measuring point via the measuring system (4, 7, 8), the measuring system (4, 7, 8) producing another height or height difference result (D), the measurement of the height or height difference (D) being carried out by the measuring system using the calibration unit (91, 92) in order to compensate for the errors of the height recording system caused by temperature variations.

11. Method according to Claim 10, **characterized in that** the preceding operations are repeated until all the points of the topographic survey have been visited and the recording and/or display of all the measurements has or have been carried out.
